# EUROPEAN PATENT SPECIFICATION

(11) **EP 2 345 811 B1**
(45) Date of publication and mention of the grant of the patent: **03.10.2012**
(21) Application number: 10000317.7
(22) Date of filing: 14.01.2010
(51) Int. Cl.: F03D 1/00, B66C 1/42, B66C 1/62

(54) **Clamp for clamping a blade for a wind turbine and method of installing wind turbine blades**
Klemme zum Klemmen eines Blatts für eine Windturbine und Verfahren zum Installieren von Windturbinenblättern
Pince pour fixer la pale d'une éolienne et procédé d'installation de pales d'éolienne

(43) Date of publication of application: 20.07.2011
(73) Proprietor: Siemens Aktiengesellschaft, 80333 München (DE)
(72) Inventor: Maj, Karl Aage, 7330 Brande (DK); Poulsen, Henning, 6900 Skjem (DK); Willim, Hans-Dieter, 89079 Ulm (DE)

(56) References cited:
- WO-A1-03/100249
- WO-A1-2008/061797
- WO-A1-2008/132226
- WO-A2-2009/141018

## Description

### Clamp for clamping a blade for a wind turbine and method of installing wind turbine blades

### Field of invention

The present invention relates to a clamp for clamping a blade for a wind turbine and to a method of installing wind turbine blades at a hub. In particular, the present invention relates to a clamp for clamping a blade for a wind turbine and a method of installing wind turbine blades which are suitable for assembling a wind turbine which does not allow rotating its hub by an external actuator.

### Background of the invention

A wind turbine is a machine which converts kinetic energy of moving air, such as wind, into mechanical energy. The mechanical energy may for example be converted into electrical energy by using a generator. Commonly in use are horizontal axis wind turbines which comprise a rotor shaft (rotatable around a horizontal axis) and a nacelle at the top of a tower. At the rotor shaft a hub is mounted to which rotor blades are connected. The blades may have a length from 20 to 70 m and the tower may have a height of 60 to 100 m or higher. Modern wind turbines in wind parks may have three blades coupled to the hub and may be oriented relative to a wind direction by rotating a top part of the wind turbine including the hub and the nacelle around a vertical axis. Further, the blade pitch angle may be adjusted by rotating the blade around a longitudinal axis of the blade. Thus, depending on a momentary wind direction and wind speed the orientation of the blades may be properly adjusted to optimize the efficiency of energy conversion.

Some wind turbines comprise a gearbox which may be used to rotate the hub by an external or integrated actuator, such as an electromotor, during installing the blades to the hub. Other wind turbines, called direct drive turbines or turbines without a gearbox or turning gear, do not allow rotating the hub by an actuator because a torque sufficient to rotate the hub cannot be generated. Those wind turbines only allow rotating the hub during normal operation when converting the wind energy into mechanical energy by driving the blades by the impinging air.

US 7,353,603 describes a method of mounting rotor blades to a rotor hub which is connected to a pot of a wind power installation. Thereby rotating the rotor hub is performed between installing individual blades by exploiting the gravitational force exerted by already mounted blades. However, for this method a turning gear is required or a crane, to rotate the rotor hub.

WO 2008/132226 A1 discloses a mounting device for mounting a wind turbine blade to a hub, wherein the turbine blade is arranged between two jaws comprised in a gripping structure. A tilt device tilts the gripping structure relative to a support structure around a vertical axis of the blade.

Document EP 2 243 954 A2 discloses a manipulator for mounting rotor blades of a wind turbine, wherein the manipulator comprises a positioning unit, via which a rotor blade received in a receiving unit may be adjusted and/or positioned relative to a lever, wherein in particular an aligning and/or positioning of the receiving unit with two or three degrees of freedom is allowed.

It turned out that the installation of a wind turbine is a difficult task due to the large size of the blades and due to the large weight of the blades. In particular, there may be a need for a method of installing wind turbine blades at a hub of a direct drive turbine. Further, there may be a need for an apparatus which is adapted for installing wind turbine blades to a hub of a wind turbine, in particular to a hub of a direct drive wind turbine not having a gearbox.

### Summary of the invention

According to an aspect there is provided a method of installing wind turbine blades at a hub rotatable around a rotation axis along a horizontal direction, wherein the method comprises lifting a first blade; rotating the first blade around a transverse axis of the first blade; mounting the first blade to the hub; lifting a second blade; rotating the second blade around a transverse axis of the second blade; mounting the second blade to the hub; rotating the hub around a vertical axis about 180°; lifting a third blade; and mounting the third blade to the hub. Thereby, the third blade may be or may not be rotated by approximately 90° around a longitudinal axis before mounting or after mounting it to the hub.

Thereby, the above method steps may not be performed subsequently in the above order but may be performed in a different order and/or may be performed at least partially simultaneously. For example, the lifting the first blade and the rotating the first blade around a transverse axis of the first blade may at least partially be performed simultaneously. Also, the lifting the second blade and rotating the second blade around a transverse axis of the second blade may at least partially be performed simultaneously. Further, for example, the lifting the third blade and mounting the third blade to the hub may be performed before rotating the hub around an vertical axis about 180° after which the first blade and the second blade are lifted, rotated and mounted to the hub.

The method may be performed on earth (or at least influenced by the gravitational force of the earth) where the gravitational force acts on the first, the second and the third blade. The lifting the first blade, the second blade and the third blade may be performed at least approximately in the vertical direction opposite to the direction of the gravitational force of the earth. The horizontal direction being the rotation axis of the hub may be at least approximately orthogonal to the vertical direction.

Before starting the method the first blade, the second blade and the third blade may have been delivered close to a tower of the wind turbine at which top the hub is mounted. The lifting the first blade, the second blade and the third blade may comprise raising the blades against the gravitational force and moving them relative to the tower such that they change their position from a position near a bottom part of the tower to a position near a top part of the tower where the hub is mounted.

For the lifting or raising the blades a crane may be used which may be installed near the tower of the wind turbine. Further, the method of installing the wind turbine blade may utilize a removable connection apparatus for removably connecting the first blade, the second blade and the third blade to the crane. In particular, the method of installing the wind turbine blades may use a clamp which is adapted to be removably connected to each of the blades and which in turn may be connected to a hook of the crane. In particular, the clamp may be adapted, to rotate a clamped blade around a transverse axis of the blade and/or to rotate a clamped blade around a longitudinal axis of the clamped blade.

A longitudinal axis of a wind turbine blade may be an axis along a direction of a maximal extent or a maximal dimension of the wind turbine blade. When installed at the hub of the wind turbine, the longitudinal axis of the wind turbine blade may be oriented at least approximately orthogonal to the rotation axis of the hub to which the wind turbine is mounted.

A transverse axis of a wind turbine blade may be an axis at least approximately orthogonal to the longitudinal axis of the wind turbine blade. When installed to the wind turbine the transverse axis of the wind turbine blade may be at least approximately parallel to the horizontal rotation axis of the hub to which the wind turbine blade is mounted.

A wind turbine blade may comprise a front surface which in operation is directed towards the wind. The front surface may also be referred to as the wind side of the blade. Further, the wind turbine blade may comprise a back surface being opposite to the front surface and having a surface normal at least approximately oriented parallel to a wind direction during operation. The back surface may also be referred to as the lee side of the blade. The front surface may have a surface normal substantially or at least approximately being oriented opposite to the surface normal of the back surface of the wind turbine blade.

The front surface and the back surface of the wind turbine blade may join at a leading edge and at a trailing edge of the wind turbine blade. The leading edge may be thicker in cross-section than the trailing edge of the wind turbine blade. The leading edge of the wind turbine blade may at least partially form the front surface of the wind turbine blade depending on a pitch angle of the blade which may be adjusted by rotating the blade around its longitudinal axis. During operation the air may impinge at the front surface and partially at the leading edge of the wind turbine blade and may then stream along the front surface from the leading edge to the trailing edge of the wind turbine blade thereby transferring wind energy to the blade which may cause the blade to rotate around the rotation axis of the hub to which it is mounted.

Two wind turbine blades may be mounted by lifting and rotating them around their respective transverse axis without the need of rotating the hub around the vertical axis which may correspond at least approximately to an axis of the tower at which top the hub is mounted. Further, the installation method may not require to rotate the hub around its rotation axis such that the installation method may be in particular applied to direct drive wind turbines not comprising a gearbox and thus not allowing rotating the hub unless rotated by wind impinging on installed wind turbine blades. In particular, the hub may be fixed at a predetermined angular position such that connectors for the blades are for example oriented at angular positions at 1 o'clock, 5 o'clock and 9 o'clock or for example at 3 o'clock, 7 o'clock and 11 o'clock. The connectors may in other embodiments be oriented at other angular positions.

Further, the installation method may be applied in particular to wind turbines having three wind turbine blades, but may be in other embodiments applied to wind turbines having less or more than three wind turbine blades, such as 2, 4, 5, 6 or more.

According to an embodiment, the method is performed in the order described above. Further, the installation method may be performed on land or offshore. Further, the installation method may be performed at a side near the turbine tower in particular at a side providing not enough empty space to assemble the entire rotor on the ground. Herein, the diameter of the assembled blades may be up to 100 m or larger which may necessitate to mount each blade individually. Further, after having mounted at least one blade it may not be possible to rotate the hub due to the exocentric weight of one or two blades mounted on the hub which may cause a considerable amount of torque for rotating the hub.

The aspect described above thus advantageously allows installing blades to a wind turbine in a simplified manner even under complicated conditions.

According to an embodiment, the method further comprises rotating the first blade around a longitudinal axis of the first blade; rotating the second blade around a longitudinal axis of the second blade; and/or rotating the third blade around a longitudinal axis of the third blade. Herein, the rotating the first, the second and/or the third blade around its respective longitudinal axis may be least partially be performed simultaneously with other steps of the installation method.

In particular, the first, the second and/or the third blade may be rotated around their respective longitudinal axis such they are oriented in a "stop position" when mounted to the hub. The stop position may be characterized by a particular pitch angle (angular position around the respective longitudinal axis of the blade), wherein the leading edge of the rotor blade may be directed towards the wind direction in order to minimize transfer of wind energy to the rotor blade during installation. When oriented in their respective stop positions the blades may not be driven by the wind, i.e. the air impinging on the blades, such that the hub does not rotate. Thereby, the installation procedure may be improved. Rotation of the hub caused by impinging air may by diminished such as to not interfere with installing the blades.

In particular, the first blade and the second blade may be mounted to the hub without rotating them around their respective longitudinal axes, such that they are not in the stop position, but in a normal running position, when mounted to the hub. After they have been mounted to the hub, they may be rotated around their respective longitudinal axes by the pitch adjustment system of the hub to orient them in the stop position.

According to an embodiment, the transverse axis of the first blade and the transverse axis of the second blade are parallel to the horizontal direction. The rotation axis of the hub runs along the horizontal direction and the transverse axis of the first blade and the transverse axis of the second blade may be at least approximately parallel to the rotation axis of the hub. Thereby, it may not be required to turn or rotate the first blade and the second blade around another axis perpendicular to the longitudinal axis of the respective blade other than the transverse axis. Thus, the installation may be simplified.

In particular, the first blade and the second blade may be provided on the ground before the lifting such that their respective transverse axes are oriented at least approximately parallel to the rotation axis of the hub. In particular, the first, the second and the third rotor blade may be provided at a side near the bottom of the wind turbine tower in a substantially or at least approximately same orientation. Thus, the installation method may be even further simplified.

According to an embodiment, a rotation direction of the rotating the first blade around the transverse axis of the first blade is opposite to a rotation direction of the rotating the second blade around the transverse axis of the second blade. Thereby, the first blade and the second blade may appropriately be oriented for mounting at a first connector of the hub and a second connector of the hub, respectively which are oriented at different angular positions which may not be changed during the installation method. Thereby, rotating the hub during the installation method may not be required. Otherwise rotating the hub may be difficult and may for particular types of turbines not possible at all.

According to an embodiment, an absolute value of a rotation angle of the rotating the first blade around the transverse axis of the first blade is equal to an absolute value of a rotation angle of the rotating the second blade around the transverse axis of the second blade, in particular 60°. Thereby, the first blade and the second blade may be appropriately oriented for mounting the first blade and the second blade at a first connector and a second connector of the hub which orientation may differ by 120°. Thereby, in particular a three blade wind turbine may be assembled.

According to an aspect, a clamp for clamping a blade for a wind turbine is provided, wherein the clamp comprises a first contact surface adapted to contact a portion of a surface of the blade; a second contact surface adapted to contact another portion of the surface of the blade, the second contact surface being displaceable relative to the first contact surface; and a bar connected in an adjustable orientation relative to the first contact surface. The clamp further comprises a first support member connected to the first contact surface; a second support member connected to the second contact surface; a hinge connecting the first support member and the second support member rotatably relative to each other; and a pivoting element rotatably connected to the first support member and rotatably connected to the bar.

In particular, the first contact surface and the second contact surface may be adapted to contact a portion of a front surface or a portion of a back surface of the blade. Further, the first contact surface and the second contact surface may have a larger extent along a longitudinal direction than along a transverse direction. In particular, the extent along the longitudinal direction may be at least five times as large as an extent along the transverse direction.

The first contact surface and/or the second contact surface may comprise elastic material, such as rubber, which may be adapted to contact a portion of a surface of the blade without (or at least reduced) damaging the portion of the surface of the blade. Further, a material forming the first contact surface and/or the second contact surface may provide high friction when the first contact surface and/or the second contact surface contacts a portion of a surface of the blade and is pressed thereon.

The first contact surface and the second contact surface may be displaceable relative to each other such that a relative position and/or a relative orientation may be changed. In particular, the displacement of the first contact surface relative to the second contact surface may comprise rotating the first contact surface relative to the second contact surface around an axis at least approximately parallel to the longitudinal direction of the first contact surface and/or the longitudinal direction of the second contact surface. By displacing the first contact surface relative to the second contact surface a portion of a surface of the blade may be contacted by the first contact surface and simultaneously another portion of the surface of the blade may be contacted by the second contact surface, in particular by applying a force to the portions of the surface of the blade via the two contact surfaces of the clamp. Thereby, the blade may be clamped between the first contact surface and the second contact surface and may be pressed by the first contact surface and the second contact surface by applying a force by the first contact surface to a portion of the surface of the blade and applying an at least approximately opposite force by the second contact surface to another portion of the surface of the blade opposite to the portion of the surface of the blade. Due to the applied forces and the friction between the first contact surface and the portion of the surface of the blade on one hand and between the second contact surface and the other portion of the surface of the blade on the other hand the blade may be held between the first contact surface and the second contact surface against a gravitational force between the blade and the earth. The gravitational force acting in a vertical direction may in particular oriented orthogonal to the longitudinal direction of the first contact surface and/or the longitudinal direction of the second contact surface.

The bar may have an extent or dimension (in its longitudinal direction) which is equal or larger than the extent of the first contact surface and/or the second contact surface along their respective longitudinal directions. In particular, the bar may have a longitudinal extension of 6 to 11 m, while the extent of the first contact surface and/or the second contact surface along their respective longitudinal directions may be between 5 and 9 m.

The bar (in particular its longitudinal direction) may be adjusted to extend at least approximately orthogonal to the longitudinal axis of the first contact surface and/or the second contact surface. The bar may have a first end connected to the first contact surface and/or the second contact surface and may have a second end (longitudinal end) which may be adapted for connecting to a hook of a crane. Thereby, the clamp may be used to releasably clamp and hold a blade and to lift the blade by moving a crane hook connected to the second longitudinal end of the bar. During operation of lifting a blade the longitudinal direction of the bar may at least approximately remain in the vertical direction.

Since the bar is connected in an adjustable orientation relative to the first contact surface which contacts a portion of the surface of the blade such that the blade is in a fixed orientation and position relative to the first contact surface, the bar may be in an adjustable orientation relative to the blade being clamped between the first contact surface and the second contact surface. Thereby, installation of a blade at a hub of a wind turbine may be enabled, simplified and improved. In particular, installing a blade to a directed drive turbine may advantageously be enabled by using the clamp, since the blade may approach a connector of the hub in an adjustable orientation such that a connector end of the blade is appropriately aligned with a connector at the hub.

As soon as a desired orientation of the bar (in particular its longitudinal direction) relative to the first contact surface (and/or relative to the second contact surface) is achieved the adjusted orientation may be locked or fixed by an appropriate locking of fixing apparatus. Thereby, it may be ensured that the adjusted orientation is maintained during particular steps of an installation method. Further, it may be required during installing the blade to change the orientation of the bar relative to the first contact surface from a first orientation to a second orientation different from the first orientation which is enabled by the clamp.

According to an embodiment, the clamp further comprises a first support member connected to the first contact surface; a second support member connected to the second contact surface; and a hinge connecting the first support member and the second support member rotatably relative to each other. The first support member and/or the second support member may support the first contact surface and/or the second contact surface. Thus, whereas the first contact surface and the second contact surface may directly contact respective portions of a surface of the blade, the first support member and the second support member may not directly contact the surface of the blade.

The first support member and the second support member may hold the first contact surface and the second contact surface, respectively and may provide a mechanism for displacing the first contact surface relative to the second contact surface. In particular, the first support member and the second support member may comprise a panel or a plate each having a surface portion which provides the first contact surface and the second contact surface, respectively. Further, the first support member and the second support member may comprise a frame structure or one or more straight or curved rods to which the first contact surface, the second contact surface and/or the panels or plates are fixedly connected.

The hinge connecting the first support member and the second support member rotatably relative to each other may allow displacing the first contact surface relative to the second contact surface. Thereby, a simple mechanism for displacing the first contact surface relative to the second contact surface may be provided.

According to an embodiment, the clamp further comprises an actuator adapted to displace the first support member relative to the second support member. The displacement of the first support member relative to the second support member may be achieved by actuating a rotation around the hinge connecting the first support member and the second support member. As actuator a electromotor or a hydraulic cylinder may be employed, thereby facilitating the installation method.

According to an embodiment, the actuator comprises a hydraulic cylinder. The hydraulic cylinder may comprise a cylinder barrel in which the piston connected to a piston rod may be movable back and forth. In particular, the cylinder barrel may be connected to the first support member or the second support member and the piston or the piston rod may be connected to the respective other support member, i.e. to the second support member or the first support member.

The hydraulic cylinder may be connectable to an oil piping system in which high pressure oil may be driven by an oil pump. Further, the oil pump may be controlled by a controller to control a movement of a piston comprised in the hydraulic cylinder.

By controlling the oil pump the piston or the piston rod may move relative to the cylinder barrel such that the first support member may move relative to the second support member. Thereby, also the first contact surface and the second contact surface may be displaced relative to each other to allow either clamping a blade in between the first contact surface and the second contact surface or to allow to release the blade by withdrawing the contact surfaces from the portions of the surface of the blade. Thereby, releasably connecting the blade to the clamp may be achieved in the simple and reliable manner. In particular, the hydraulic cylinder may exert forces to the first contact surface and the second contact surface opposing each other and pressing against portions of the surface of the blade such that a generated friction force between the contact surfaces is high enough to exceed a gravitational force resulting from the mass of the blade.

According to an embodiment, the first support member and/or the second support member comprises a bent portion. In particular, the first contact surface and the second contact surface may be adapted to contact a portion of a front surface of the blade and a portion of a back surface of the blade, respectively. In particular, portions of the front surface and the back surface of the blade closer to a leading edge of the blade than to a trailing edge of the blade may be contacted by the first contact area and the second contact area. Thereby, the hinge connecting the first support member and the second support member may be arranged closer to the trailing edge than to the leading edge of the blade when the blade is clamped by the clamp during operation. Thereby, it may be advantageous when the first support member and/or the second support member comprises a bent portion near the trailing edge of the blade in order not to damage the trailing edge of the blade, when the clamp is releasably attached to the blade by pressing the contact surfaces against portions of the surface of the blade. Further, the first and/or the second support member may comprise a bracket or a yoke being curved at least partially around the trailing edge of the blade when the clamp is applied to the blade.

According to an embodiment, the clamp further comprises a pivoting element rotatably connected to the first support member and rotatably connected to the bar. The pivoting element may allow adjusting the orientation of the bar relative to the first contact surface. In particular, the pivoting element may be connected to the first support member by a hinge or joint and may also be connected to the bar by a hinge or joint. For adjusting a desired orientation of the bar relative to the first contact area it may be required to rotate the pivoting element relative to the first support member and also rotating the bar relative to the pivoting element. Thereby, the orientation of the bar relative to the first contact area may be adjusted in a simple way.

In particular, the clamp may have (at least approximately) a mirror symmetry plane oriented at least approximately orthogonal to the longitudinal axis of the first contact surface and the second contact surface. Thereby, the bar may be arranged at least approximately in the mirror symmetry plane and thus in a central part of the clamp. Thus, the blade may be easier balanced when lifted using the clamp via the bar connected to a crane hook.

According to an embodiment, the clamp further comprises an adjustment system which is adapted to adjust the orientation of the bar relative to the first contact surface in a first direction and adapted to adjust the orientation of the bar relative to the first contact surface in a second direction different from the first direction. In particular, the adjustment system may comprise a hinge or joint connecting the pivoting element to the first support member, wherein the hinge has a rotation axis oriented at least approximately parallel to the longitudinal direction of the first contact area and may allow to adjust the orientation of the bar relative to the first contact surface in the first direction.

Further, the adjustment system may comprise a hinge or joint connecting the pivoting element to the bar, wherein the hinge may have a rotation axis which may allow adjustment be at least approximately oriented parallel to the transverse axis of the blade but which direction may change upon rotating the pivoting element around the hinge relative to the first support member. When a blade is clamped between the first contact surface and the second contact surface of the clamp, the rotation axis of the hinge may run through a center of gravity of the clamped blade, in order to reduce the torque required to rotate the blade and to avoid or diminish that the orientation (which may be vertical) of the bar changes when rotating the bar relative to the pivoting element.

The hinge connecting the pivoting element and the bar may be adapted to change the orientation of the bar relative to the first contact surface in the second direction. In particular, the second direction may be orthogonal to the first direction, in particular for any orientation of the pivoting element relative to the first support member. Thereby, adjustment of the orientation of the bar relative to the first contact surface may be achieved in a simple manner by adjustment of the orientation in two directions different from each other and independent from each other.

According to an embodiment, the adjustment system comprises a first hydraulic cylinder of which one end is connected to the pivoting element and another end is connected to the bar to adjust the orientation of the bar relative to the first contact surface in the first direction. Thereby, the hydraulic cylinder may comprise a cylinder barrel at one end and a piston or piston rod at the other end. Further, the hydraulic cylinder may comprise a connection to an oil pipe system in which oil may be contained which may be driven by an oil pump. Thereby, the orientation of the bar relative to the first contact surface in the first direction may easily be adjusted. Thereby a blade clamped by the clamp may be rotated around its transversal axis which may be used in a method of installing the blade to a hub of a wind turbine.

According to an embodiment, the adjustment system further comprises a second hydraulic cylinder of which one end is connected to the pivoting element and another end is connected to the first support member to adjust the orientation of the bar relative to the first contact surface in the second direction. Thereby a blade clamped by the clamp may be rotated around its longitudinal axis which may be used in a method of installing the blade to a hub of a wind turbine.

Thereby, in particular, the clamping of the blade between the first contact surface and the second contact surface as well as the adjustment of the orientation of the bar relative to the first contact area may be achieved by hydraulic cylinders thus requiring only one type of actuator to simplify the construction of the clamp and reduce the costs of the clamp in particular during operation. In particular, conventional hydraulic oil systems may be used to actuate the hydraulic cylinders comprised in the clamp.

According to an embodiment, the clamp further comprises a drawing and fixing apparatus and a wire, wherein the drawing and fixing mechanism is configured for drawing the wire and fixing the wire. In particular, the drawing and fixing apparatus may be adapted to guide a wire at least approximately along or parallel to a longitudinal direction of the first contact surface such that the wire may be drawn or may be released controlled by a control system. Further, the drawing and fixing apparatus may comprise at least one roller for rolling the wire in and/or out, wherein the roller may be driven by an actuator, such as an electromotor. The wire may be led over one or more rollers comprised in the drawing and fixing apparatus and may also be led over a roller connected to the crane lifting the clamped blade. By controlling the rolling in and/or rolling out of the wire the blade may be turned or steered according to requirements during installing the blade to the hub of the wind turbine. Thereby, the installation method using the clamp may still further be improved.

It has to be noted that embodiments of the invention have been described with reference to different subject matters. In particular, some embodiments have been described with reference to method type claims whereas other embodiments have been described with reference to apparatus type claims. However, a person skilled in the art will gather from the above and the following description that, unless other notified, in addition to any combination of features belonging to one type of subject matter also any combination between features relating to different subject matters, in particular between features of the method type claims and features of the apparatus type claims is considered as to be disclosed with this document.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

Embodiments of the present invention are now described with reference to the accompanying drawings.

### Brief Description of the Drawings

Figure 1 shows a schematic perspective view of a clamp for clamping a blade for a wind turbine according to an embodiment;
Figure 2 schematically illustrates a side view of the clamp illustrated in Figure 1.
Figure 3 schematically illustrates a bottom view of the clamp illustrated in Figure 1.
Figures 4A, 4B, 4C, 4D, 4E, 4F, 4G and 4H schematically illustrate a method of installing wind turbine blades at a hub according to an embodiment.
Figure 5 schematically illustrates a portion of a method of installing blades to a hub according to an embodiment using a clamp according to an embodiment.

### Detailed Description

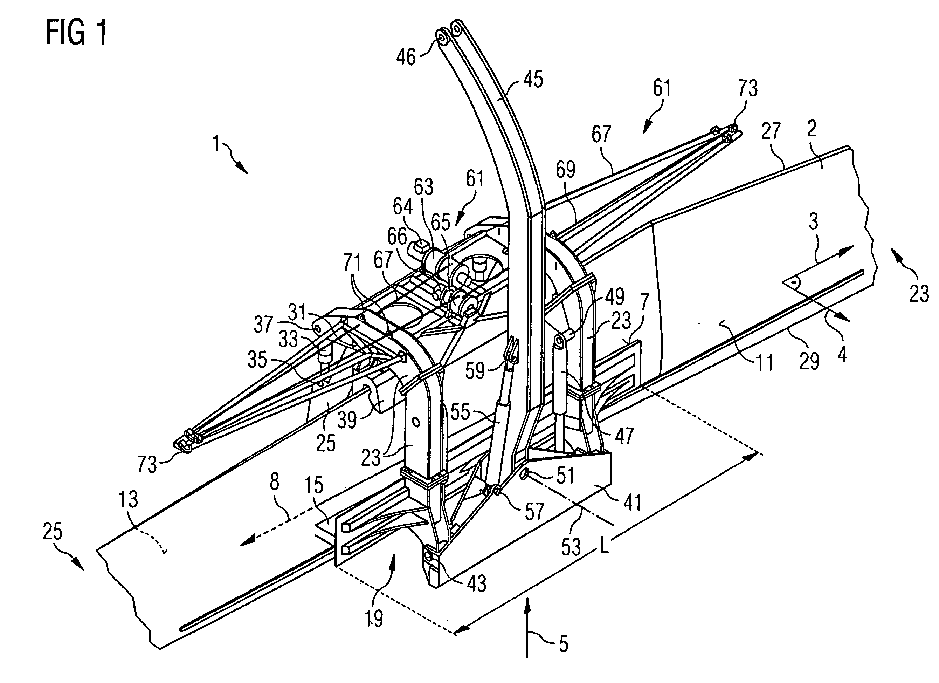

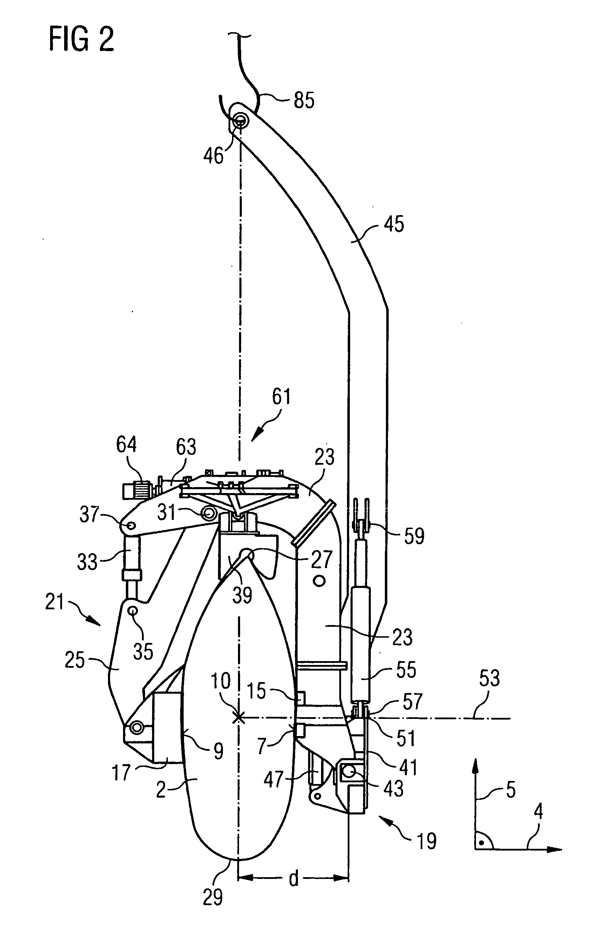

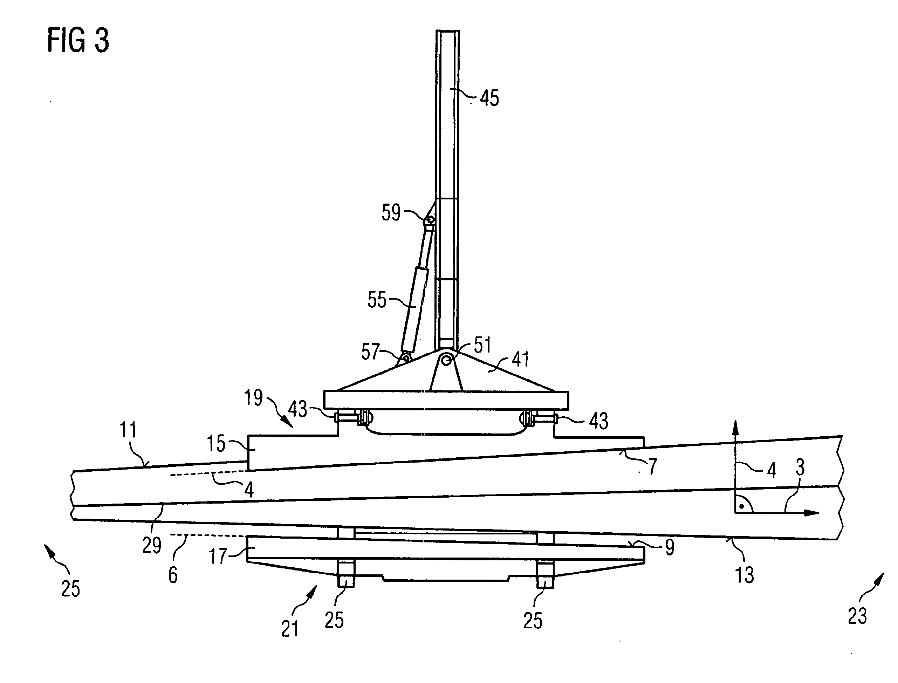

Figure 1 shows a perspective view of a blade 1 according to an embodiment. The clamp 1 is illustrated in Figure 1 while clamping a blade 2 for a wind turbine. A side view of the clamp 1 in a direction 3 indicated in Figure 1 is illustrated in Figure 2. A bottom view along the direction 5 illustrated in Figure 1 is illustrated in Figure 3.

The clamp 1 comprises a first contact surface 7 and a second contact surface 9. The first contact surface 7 and the second contact surface 9 are adapted to contact different portions of a surface of the blade 2. In the illustrated embodiment the first contact surface 7 contacts a portion of a back surface 11 of the blade 2, while the contact surface 9 of the clamp 1 contacts a portion of a front face 13 of the blade 2. While Figures 1 and 2 illustrate a state of the clamp 1, wherein the first contact surface 7 contacts the portion of the back surface 11 and the second contact surface 9 of the clamp contacts a portion of the front surface 13 of the blade 2, Figure 3 illustrates a state of the clamp 1 upon releasing or applying the clamp 1 from the blade 2, wherein the second contact surface 9 does not contact the portion of the front face 13 of the blade 2.

Thereby, it is apparent, that the first contact surface 7 and the second contact surface 9 of the clamp 1 may be displaced relative to each other to allow removably receiving a blade 2 in between the first contact surface 7 and the second contact surface 9. The first contact surface 7 as well as the second contact surface 9 have an elongated shape and may have in particular a rectangular shape having a longitudinal direction 4 and 6 (illustrated in Fig. 3) approximately running along the direction 3 indicated in Figure 1. In particular, the direction 3 may be a longitudinal direction or axis of the blade 2.

An extent L of the first contact surface 7 in its longitudinal direction 3 may amount to between 5 m and 10 m. An extent along a vertical direction of the first contact surface 7 which at least approximately runs along the direction 5 indicated in Figure 1 may amount to between a fifth to a tenth of the extent L of the first contact surface along the longitudinal direction 3.

The first contact surface 7 is formed on a first levelling piece 15 and the second contact surface 9 is formed on a second levelling piece 17. From the bottom view of the clamp 1 illustrated in Figure 3 it is apparent that the levelling pieces 15 and 17 have a wedge shaped form. The first levelling piece 15 is fixed at a first support member 19 and the second levelling piece 17 is fixed at a second support member 21. Thereby, the first support member 19 and the second support member 21 provide surfaces which extend at least approximately parallel to the longitudinal direction 3 of the blade 2. The longitudinal direction 4 of the first contact surface 7 may not be parallel to the longitudinal direction of the blade 2 but may include an angle with the direction 3 which may be 5° to 20°. The second contact surface also has a longitudinal direction 6 which is not parallel to the longitudinal direction 3 of the blade.

Providing the first contact surface as well as the second contact surface having a longitudinal axis not parallel to each other is necessary for appropriately clamping and contacting a portion of the back surface 11 and a portion of the front surface 13 of the blade, since the cross-sectional size of the blade 2 decreases from a radially inner end 23 of the blade to a radially outer end 25 of the blade 2. At the radially inner end 23 (not illustrated in Figures 1, 2 and 3) the blade 2 may be connected to a hub of a wind turbine. To compensate for the decreasing cross-sectional size of the blade from the radially inner end 23 to the radially outer end 25 the levelling pieces 15 and 17 are provided with increasing thickness such that the first contact surface 7 and the second contact surface 9 are adapted to and closely and smoothly fit to the respective portions of the back surface 11 and the front surface 13 of the blade 2.

The first contact surface 7 as well as the second contact surface 9 may comprise an elastic material, such as rubber, which may be conforming with a local surface shape of the back surface 11 and the front surface 13 of the blade 2. Further, an appropriate material may be provided at the first contact surface 7 and the second contact surface 9 which upon pressing the contact surfaces 7, 9 towards the back surface 11 and the front surface 13, respectively, establishes a friction to such a degree that the blade 2 may be lifted using the clamp 1.

The first support member 19 holding the first contact surface 7 further comprises two rods 23 which are spaced apart along the longitudinal direction 4 of the first contact area 7 and extend transverse to the longitudinal direction 6 of the first contact surface 7. Further, the second support member 21 comprises two rods 25 which are also spaced apart in a longitudinal direction 6 of the second contact surface and also extend transverse to the longitudinal direction 8 of the second contact surface 9. The two rods 23 as well as the two rods 25 may be each provided as a single piece, such as a metal rod or bracket, or may be comprised of several pieces connected together using for example bolts or the like. In the embodiment illustrated in Figure 1 the rods 23 are assembled from two metal pieces (such as brackets or carriers) which are connected by bolts.

Thereby, the rods 23 assume a bent shape thereby partially surrounding a trailing edge 27 of the blade 2. The trailing edge 27 of the blade 2 may be an edge where the back surface 11 and the front surface 13 of the blade join each other. Opposite to the trailing edge 27 the blade may have a leading edge 29. As is apparent from Figure 1 and from Figure 2 the first contact surface 7 and the second contact surface 9 contact a portion of the back surface 11 and the front surface 13, respectively, which is closer to the leading edge 29 of the blade 2 than to the trailing edge 27 of the blade 2.

As mentioned above, the two rods 23 partially surround the trailing edge 27 of the blade 2 and protrude beyond the trailing edge 27. The two rods 25 comprised in the second support member which is connected to the second contact surface 9 are connected to the two rods 23 of the first support member by a hinge or joint 31 which allows to displace the rods 25 and the rods 23 relative to each other and thus to displace the first contact surface 7 relative to the second contact surface 9.

For displacing the contact surfaces 7, 9 relative to each other by rotating the rods 23 relative to the rods 25 around the hinge axis of the hinge 31 two hydraulic cylinders 33 are provided, wherein a piston rod end of the cylinder 33 is connected to a hinge or joint 35 at the rods 25 and a cylinder barrel end of the cylinder 33 is connected to a hinge or joint 37 at the end of the rod 23. The hydraulic cylinder 33 is connectable to a not illustrated oil piping system to control movement of the piston of the cylinder 33 to rotate the first contact surface 7 relative to the second contact surface 9 around the axis of the hinge 31. Thereby, it is enabled to press the contact surfaces 7, 9 against the blade surfaces 11, 13 in order to clamp the blade 2 for lifting the blade 2 during installing the blade 2 to a hub of a wind turbine. Further the clamp can be released from the blade by withdrawing the piston into the cylinder 33.

In order to avoid or diminish damage of the fragile trailing edge 27 of the blade 2 the clamp 1 comprises a rubber lip 39 approximately extending parallel to the first and the second contact surfaces 7, 9 and extending parallel to the trailing edge 27 of the blade 2. The rubber lip 39 partially surrounds the trailing edge 27 and may damp small movements of the blade and may further secure the blade from shifting in the transverse direction 4 and/or the vertical direction 5.

The blade 1 further comprises a pivoting element 41 which is connected via hinges or joints 43 to the first support member 19. The hinges 43 allow rotation of the pivoting element 41 relative to the first support member 19 along an axis that approximately runs parallel to the longitudinal axis 3 of the blade or at least approximately parallel to the longitudinal axis 8 of the first contact surface 7.

As illustrated in Fig. 2 the bar 45 comprises an eye or hole 46 to which a hook of a crane may be connected. Thereby, in operation, the center of gravity 10 of the blade 2 is approximately arranged at a vertical line parallel to the direction 5 running through the hole 46. A distance d between the vertical line running through the center 10 of gravity of the blade 2 and the hole 46 of the bar 45 and a vertical line through the rotation axis defined by hinges 43 will change upon rotation of the pivoting element 41 relative to the first contact surface 7 such that the bar 45 will slightly deviate from its vertical orientation.

However, the distance d for the situation illustrated in Fig. 2 will be the same as for a situation where the contact surface 7 is, compared to the situation illustrated in Fig. 2, rotated by 90° relative to the pivoting element 41 around the axis defined by the hinges 43 such that for at least these situations the bar 45 will be arranged in a vertical orientation.

When using the clamp 1 a bar 45 connected to the pivoting element 41 and thus also connected to the first contact surface 7 and to the second contact surface 9 may extend in a substantially vertical direction 5. Thus, by rotating the first support member 19 relative to the pivoting element 41 around the axis of the hinges 43 the blade 2 may be rotated approximately around its longitudinal axis 3. To actuate this longitudinal rotation of the blade 3 the clamp 1 further comprises two hydraulic cylinders 47 of which one end (cylinder barrel) is connected to the first support member 19, in particular to the two rods 23 at connection points 49 and of which a piston rod end of the cylinders 47 is connected to the pivoting element 41. Also these cylinders 47 may be actuated by supplying oil driven by an oil pump to thus rotate the pivoting element 41 around the axis of the hinges 43 relative to the first support member 19. During operation of installing the blade 2 the blade may thereby rotated around its longitudinal axis 3, while the bar 45 remains in a vertical orientation.

The bar 45 is connected to the pivoting element 41 via a hinge or joint 51 which allows swivelling the bar 45 relative to the pivoting element 41 around an axis 53 which may be at least approximately orthogonal to the axis provided by the hinges 43. In particular, the axis 53 may be at least approximately orthogonal to the longitudinal axis 3 of the blade 2 and may (in a particular orientation of the pivoting element 41 and the first support member 19) be parallel to or inclined relative to a transverse axis 4 of the blade. The transverse axis 4 of the blade 2 may be orthogonal to the longitudinal axis 3 of the blade 2. Further, the transverse axis 4 may be at least approximately orthogonal to a plane through the leading edge 29 and the trailing edge 27 of the blade 2.

For actuating a rotation of the bar 45 relative to the pivoting element 41 around the axis 53 the clamp 1 further comprises a hydraulic cylinder 55 of which one end (the cylinder barrel) is connected at a hinge or joint 57 to the pivoting element 41 and of which the other end (the piston rod) is connected at a connection point or joint 59 to the bar 45. By changing the length between the points 57 and 59 (actuating the hydraulic cylinder 55) the bar 45 may be rotated around the axis 53 relative to the pivoting element 41. Thereby, a rotation of the blade around its transverse axis 4 may be achieved.

Controlled rotation of the blade 2 around its longitudinal axis 3 and around its transverse axis 4 may be required for installing the blade 2 to a hub of a wind turbine, in particular to a hub of a direct drive wind turbine.

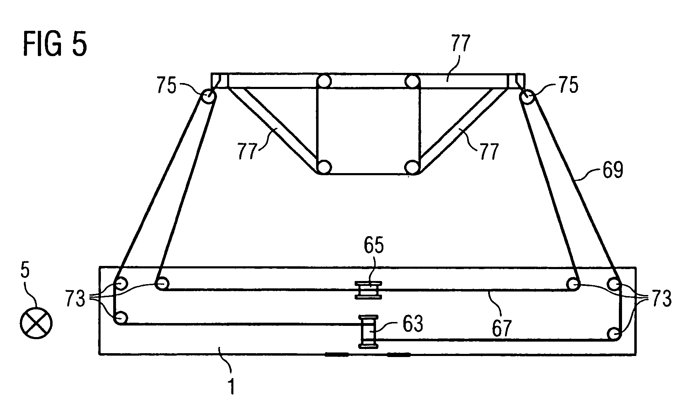

The clamp 1 further comprises a steering mechanism 61 for turning or rotating the clamp 1 and thus the blade 2 around the vertical axis 5, an axis at least approximately perpendicular to the longitudinal axis 3 of the blade and also perpendicular to the transverse axis 4 of the blade 2. For achieving this the steering apparatus 61 comprises a double roller 63 and a single roller 65. Further, the steering mechanism 61 comprises two wires 67 and 69 which are led through holes 71 along the longitudinal axis 3 and around rollers 73. As is illustrated in Figure 5 the wires 67 and 69 may be led across rollers 75 connected to a crane boom 77. By rotating the roller 63 using the electromotor 64 one end of the wire 67 will be rolled out, while the other end of the wire 67 is rolled in which results in turning the clamp 1 around the vertical direction 5 being perpendicular to the drawing plane of Figure 5.

By turning the roller 65 by the electromotor 66 both ends of the wire 69 will be rolled up or both ends of the wire will be rolled in resulting in a parallel shift of the clamp 1 towards the crane boom 77 or away from the crane boom 77.

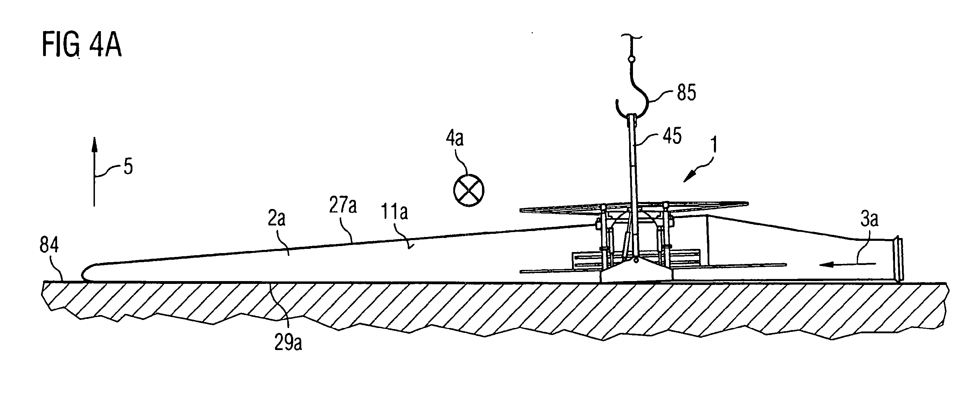

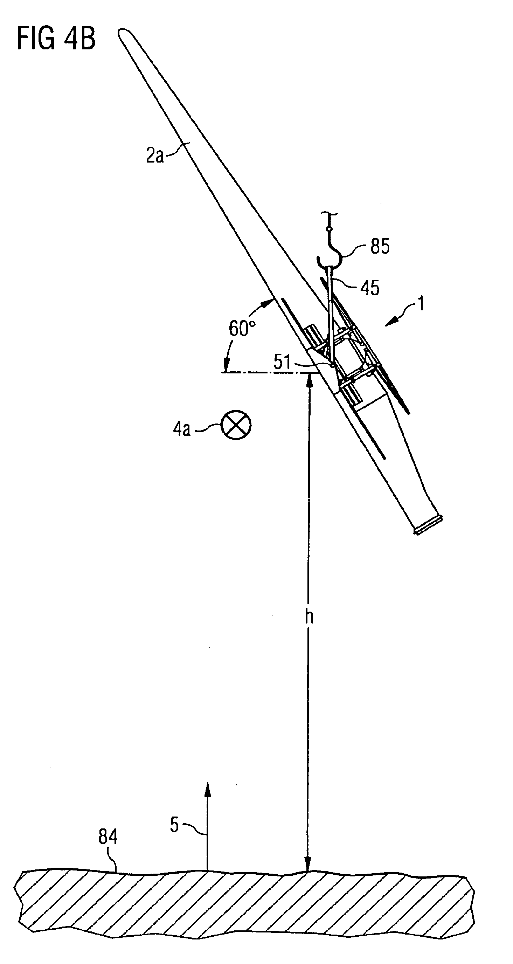

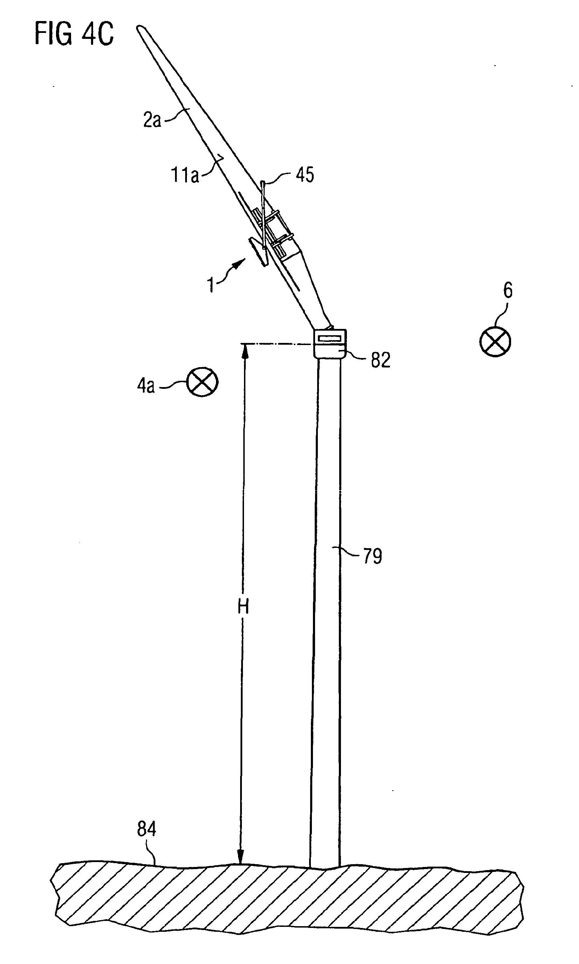

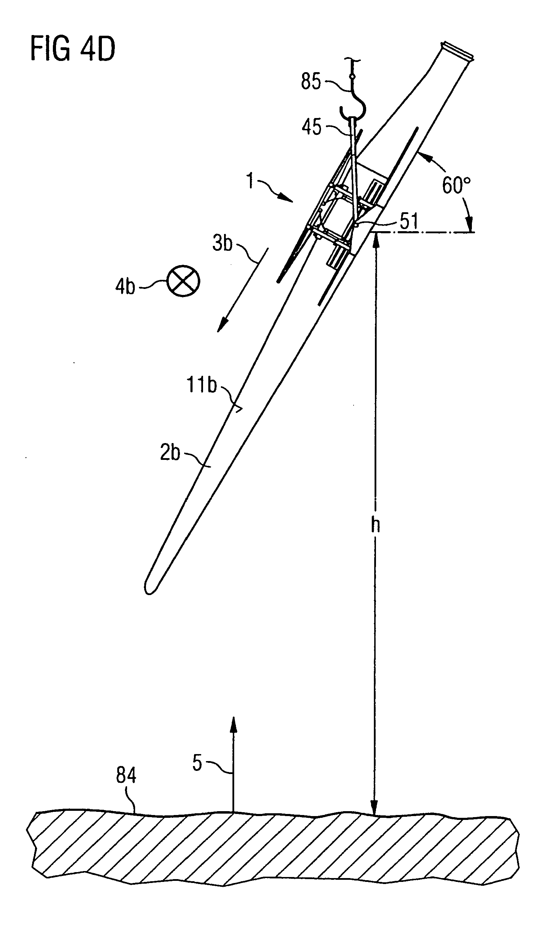

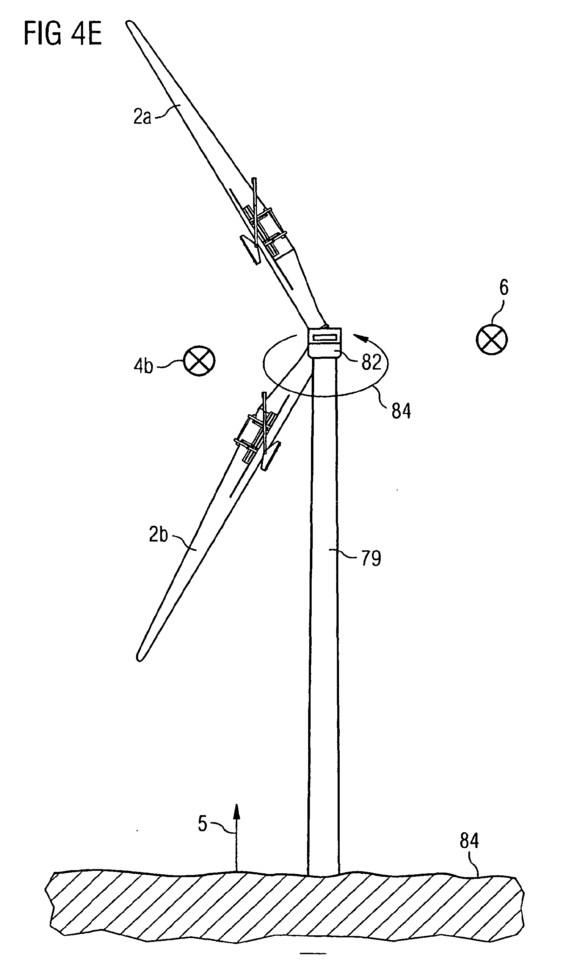

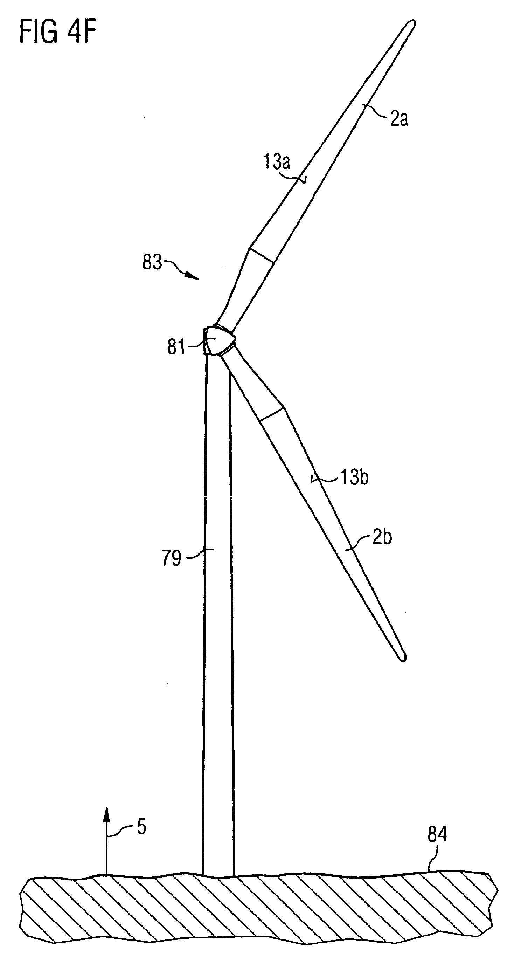

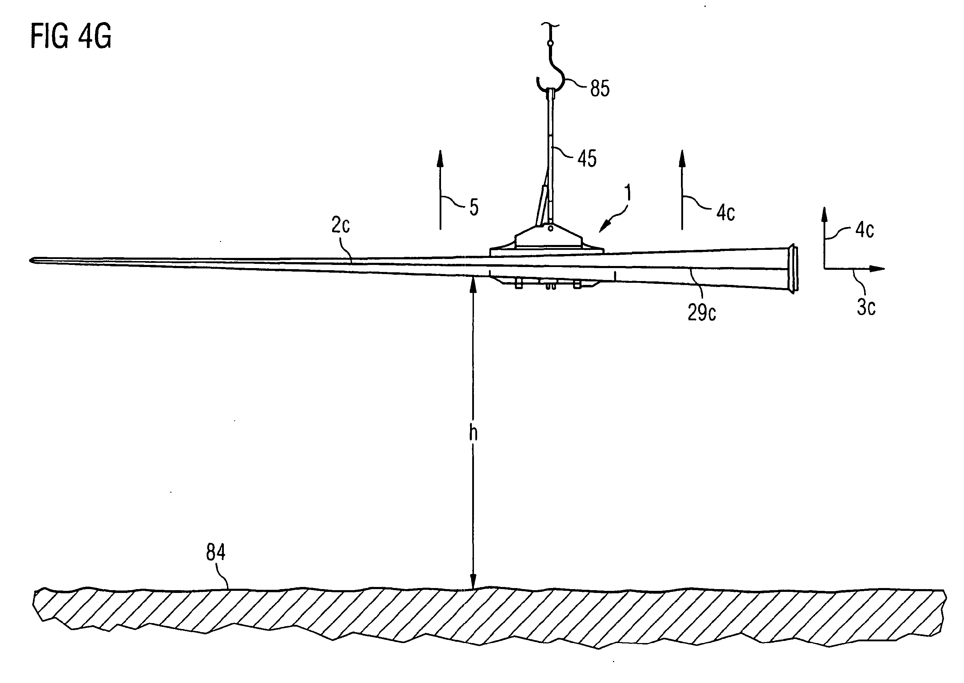

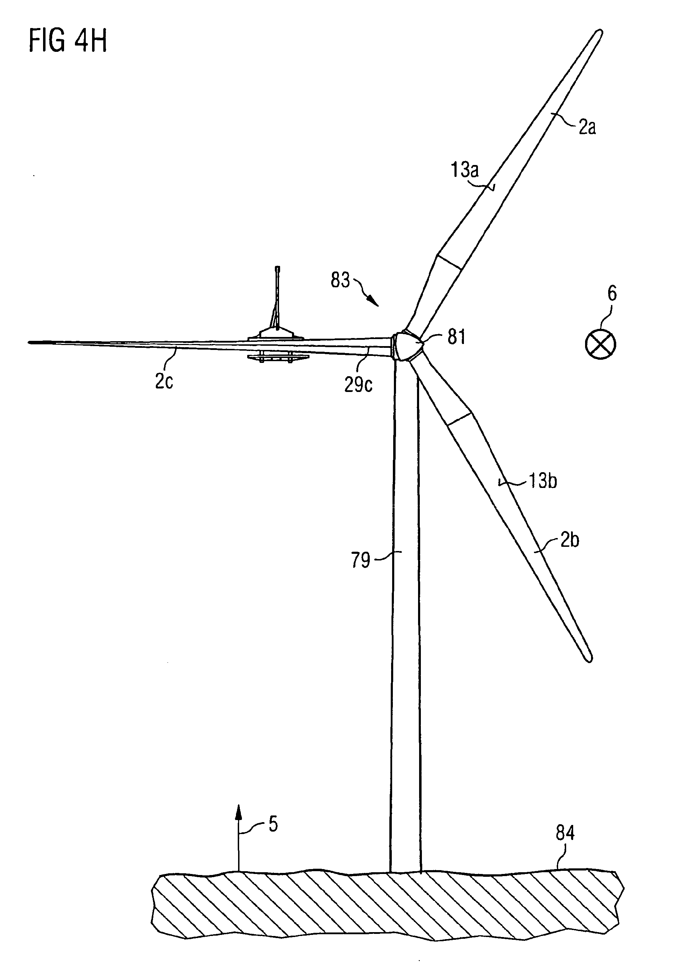

Figures 4A, 4B, 4C, 4D, 4E, 4F, 4G and 4H illustrate a method of installing wind turbine blades at a hub according to an embodiment.

At a beginning, as illustrated in Figure 4A, a blade 2a is provided at a side near a tower 79 of a wind turbine. In the embodiment illustrated in Figure 4A the first rotor blade 2a lies at a ground 84 or is held in a support apparatus such that the leading edge 29a faces downwards and the trailing edge 27a faces upwards relative to the vertical direction 5. In the illustrated embodiment the back face 11a faces the observer in Figure 4A. For installing the first blade 2a to the hub 81 of the wind turbine 83 (see Figure 4G) the blade 2a is clamped by clamp 1 illustrated in Figures 1, 2 and 3. Thereby, the first contact surface 7 and the second contact surface 9 are pressed against the back surface 11a and the front surface 13a of the blade 2a. As illustrated in Fig. 4A, a crane hook 85 is connected to the bar of the clamp 1, wherein the crane hook 85 is connected to a not illustrated crane via a cord or wire.

Using the crane hook 85 and the clamp 1 clamped at the blade 2a the blade 2a is lifted vertically upwards in the direction 5 against the gravitational force, as illustrated in Figures 4A and 4B. The blade 2a is lifted of the ground 84 and the hydraulic cylinder 55 (also illustrated in Figure 1) is actuated to rotate the bar 45 relative to the pivoting element 41 around the axis 53 at the hinge 51. In particular, the rotation is anti-clockwise by an angle of 60°. Since the blade 2a is tightly coupled to the contact surfaces 7 and 9 of the clamp the blade rotates in a clockwise direction about an angle of 60°, while the bar 45 remains in the vertical orientation.

The rotating the blade 2a may be performed during lifting the blade as soon as the blade is lifted off the ground 84 far enough (height h) allowing rotating the blade 2a without touching the ground 84. Alternatively, the blade may first be lifted to a final height and may then be rotated as explained above.

As is further illustrated in Figure 4C the blade 2 is mounted to a hub 81 arranged at a top of a tower 79 of the wind turbine 83. Thereby, Figure 4C illustrates a back view of the wind turbine 83 such that a nacelle 82 is visible. When completely assembled the wind would impinge at the front side 13a of the blade 2a which is opposite to the back side 11a facing the observer of Figure 4C.

Further, a second blade 2b is clamped by clamp 1 analogous to blade 2a illustrated in Figure 4A and the blade 2b is lifted up the ground 84 as blade 2a. However, as is illustrated in Figure 4D the blade 2b is rotated around the axis 53 at hinge 51 in an opposite direction to the rotation direction of blade 2a illustrated in Figure 4B. In particular, blade 2b is rotated anti-clockwise at an angle of 60°, as illustrated in Figure 4D. Thereby, the rotating the blade 2b around the axis 53 at the hinge 51 may be performed while lifting the blade 2b after partially lifting the blade 2b or after completely lifting the blade 2b off the ground 84. As is illustrated in Figure 4E the second blade is mounted to the hub 81 of the wind turbine 83 without requiring rotating the hub 81 around its rotation axis 6, which runs horizontally. As is apparent from Figures 4A-4G the bar 45 always extends in a vertical direction 5 during different method steps.

As is illustrated in Figure 4F the top part of the turbine 83 including the nacelle 82 and the hub 81 is then rotated around the vertical axis 5 by 180° such that after the rotation the hub 81 and the front faces 13a, 13b of the already mounted first blade 2a and second blade 2b face the observer. The rotation of the nacelle 82 and the hub 81 is indicated in Figure 4E by an arrow 84.

As is illustrated in Figure 4G the third blade 2c originally also oriented with its upstream edge 29c facing downwards is rotated around its longitudinal axis 3c around 90° such that the leading edge 29c faces the observer. For this rotation the pivoting element 41 was rotated relative to the first support member 19 around the axis defined by the hinges 43 (see Figure 1). As illustrated in Figure 4H the third blade 3c is lifted off the ground 84 against the gravitational force and is mounted with its longitudinal axis 3c oriented unchanged in a horizontal direction to the hub 81 of the wind turbine 83.

Thereby, it was not required to rotate the third blade 3c around its transverse direction 4c. Further, it was not required or necessary to rotate the hub 81 in order to mount the third blade 3c to the hub 81. In fact, it may not be required to rotate the hub 81 around its rotation axis 6 (oriented horizontally) for mounting the three blades 2a, 2b and 2c to the hub 81. Thereby, the described method of installing wind turbine blades may be advantageously employed when assembling direct drive wind turbines that do not allow rotating the hub by an additional actuator.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

## Claims

1. Method of installing wind turbine blades at a hub rotatable around a rotation axis along a horizontal direction (6), the method comprising:
• lifting a first blade (2a);
• rotating the first blade around a transverse axis (4a) of the first blade;
• mounting the first blade to the hub (81);
• lifting a second blade (2b);
• rotating the second blade around a transverse axis (2b) of the second blade;
• mounting the second blade to the hub;
• rotating the hub around a vertical axis (5) about 180°;
• lifting a third blade (2c); and
• mounting the third blade to the hub.

2. Method according to claim 1, further comprising:
• rotating the first blade around a longitudinal axis (3a) of the first blade;
• rotating the second blade around a longitudinal axis (3b) of the second blade; and/or
• rotating the third blade around a longitudinal axis (3c) of the third blade.

3. Method according to claim 1 or 2, wherein the transverse axis of the first blade and the transverse axis of the second blade are parallel to the horizontal direction (6).

4. Method according to claim 3, wherein
a rotation direction of the rotating the first blade around the transverse axis of the first blade is opposite to a rotation direction of the rotating the second blade around the transverse axis of the second blade.

5. Method according to any of the preceding claims, wherein an absolute value of a rotation angle of the rotating the first blade around the transverse axis of the first blade is equal to an absolute value of a rotation angle of the rotating the second blade around the transverse axis of the second blade, in particular 60°.

6. Clamp for clamping a blade for a wind turbine, the clamp comprising:
• a first contact surface (7) adapted to contact a portion of a surface of the blade;
• a second contact surface (9) adapted to contact another portion of the surface of the blade, the second contact surface being displaceable relative to the first contact surface;
• a bar (45) connected in an adjustable orientation relative to the first contact surface;
• an adjustment system (55,47) adapted to adjust the orientation of the bar relative to the first contact surface in a first direction and adapted to adjust the orientation of the bar relative to the first contact surface in a second direction different from the first direction, the clamp further comprising:
• a first support member (19) connected to the first contact surface;
• a second support member (21) connected to the second contact surface;
• a hinge (31) connecting the first support member and the second support member rotatably relative to each other;
**characterised in that** it comprises a pivoting element (41) rotatably connected to the first support member and rotatably connected to the bar.

7. Clamp according to claim 6, further comprising:
• an actuator (33) adapted to displace the first support member relative to the second support member.

8. Clamp according to claim 7, wherein the actuator comprises an hydraulic cylinder (33).

9. Clamp according to one of claims 6 to 8, wherein the first support member and/or the second support member comprises a bent portion (23).

10. Clamp according to one of claims 6 to 9, wherein the adjustment system comprises a first hydraulic cylinder (55) of which one end is connected to the pivoting element and another end is connected to the bar to adjust the orientation of the bar relative to the first contact surface in the first direction.

11. Clamp according to one of claims 6 to 10, wherein the adjustment system comprises a second hydraulic cylinder (47) of which one end is connected to the pivoting element and another end is connected to the first support member to adjust the orientation of the bar relative to the first contact surface in the second direction.

12. Clamp according to one of claims 6 to 11, further comprising a drawing and fixing apparatus (61) and a wire (67,69), wherein the drawing and fixing apparatus is configured for drawing the wire and fixing the wire.

## Patentansprüche

1. Verfahren zum Installieren von Windturbinenblättern an einer Nabe, die um eine entlang einer horizontalen Richtung verlaufende Drehachse (6) drehbar ist, wobei das Verfahren umfasst:
• Heben eines ersten Blattes (2a);
• Drehen des ersten Blattes um eine Querachse (4a) des ersten Blattes;
• Anbringen des ersten Blattes an der Nabe (81);
• Heben eines zweiten Blattes (2b);
• Drehen des zweiten Blattes um eine Querachse (2b) des zweiten Blattes;
• Anbringen des zweiten Blattes an der Nabe;
• Drehen der Nabe um etwa 180° um eine vertikale Achse (5);
• Heben eines dritten Blattes (2c); und
• Anbringen des dritten Blattes an der Nabe.

2. Verfahren nach Anspruch 1, welches ferner umfasst:
• Drehen des ersten Blattes um eine Längsachse (3a) des ersten Blattes;
• Drehen des zweiten Blattes um eine Längsachse (3b) des zweiten Blattes; und/oder
• Drehen des dritten Blattes um eine Längsachse (3c) des dritten Blattes.

3. Verfahren nach Anspruch 1 oder 2, wobei die Querachse des ersten Blattes und die Querachse des zweiten Blattes parallel zu der horizontalen Richtung (6) sind.

4. Verfahren nach Anspruch 3, wobei
eine Drehrichtung des Drehens des ersten Blattes um die Querachse des ersten Blattes entgegengesetzt zu einer Drehrichtung des Drehens des zweiten Blattes um die Querachse des zweiten Blattes ist.

5. Verfahren nach einem der vorhergehenden Ansprüche, wobei ein absoluter Betrag eines Drehwinkels des Drehens des ersten Blattes um die Querachse des ersten Blattes gleich einem absoluten Betrag eines Drehwinkels des Drehens des zweiten Blattes um die Querachse des zweiten Blattes ist, insbesondere gleich 60°.

6. Klemme zum Klemmen eines Blattes für eine Windturbine, wobei die Klemme umfasst:
• eine erste Kontaktfläche (7), die dazu eingerichtet ist, sich mit einem Abschnitt einer Fläche des Blattes in Kontakt zu befinden;
• eine zweite Kontaktfläche (9), die dazu eingerichtet ist, sich mit einem anderen Abschnitt der Fläche des Blattes in Kontakt zu befinden, wobei die zweite Kontaktfläche relativ zu der ersten Kontaktfläche verschiebbar ist;
• eine Stange (45), die in einer bezüglich der ersten Kontaktfläche einstellbaren Ausrichtung verbunden ist;
• ein Einstellsystem (55, 47), das dazu eingerichtet ist, die Ausrichtung der Stange bezüglich der ersten Kontaktfläche in einer ersten Richtung einzustellen, und dazu eingerichtet ist, die Ausrichtung der Stange bezüglich der ersten Kontaktfläche in einer zweiten Richtung einzustellen, die von der ersten Richtung verschieden ist,
wobei die Klemme ferner umfasst:
• ein erstes Stützelement (19), das mit der ersten Kontaktfläche verbunden ist;
• ein zweites Stützelement (21), das mit der zweiten Kontaktfläche verbunden ist;
• ein Gelenk (31), welches das erste Stützelement und das zweite Stützelement drehbar relativ zueinander verbindet; **dadurch gekennzeichnet, dass** es ein Schwenkelement (41) umfasst, das drehbar mit dem ersten Stützelement verbunden ist und drehbar mit der Stange verbunden ist.

7. Klemme nach Anspruch 6, welche ferner umfasst:
• einen Aktor (33), der dazu eingerichtet ist, das erste Stützelement relativ zu dem zweiten Stützelement zu verschieben.

8. Klemme nach Anspruch 7, wobei der Aktor einen Hydraulikzylinder (33) umfasst.

9. Klemme nach einem der Ansprüche 6 bis 8, wobei das erste Stützelement und/oder das zweite Stützelement einen gebogenen Abschnitt (23) umfasst.

10. Klemme nach einem der Ansprüche 6 bis 9, wobei das Einstellsystem einen ersten Hydraulikzylinder (55) umfasst, von welchem ein Ende mit dem Schwenkelement verbunden ist und ein anderes Ende mit der Stange verbunden ist, um die Ausrichtung der Stange bezüglich der ersten Kontaktfläche in der ersten Richtung einzustellen.

11. Klemme nach einem der Ansprüche 6 bis 10, wobei das Einstellsystem einen zweiten Hydraulikzylinder (47) umfasst, von welchem ein Ende mit dem Schwenkelement verbunden ist und ein anderes Ende mit dem ersten Stützelement verbunden ist, um die Ausrichtung der Stange bezüglich der ersten Kontaktfläche in der zweiten Richtung einzustellen.

12. Klemme nach einem der Ansprüche 6 bis 11, welche ferner eine Zieh- und Befestigungsvorrichtung (61) und einen Draht (67, 69) umfasst, wobei die Zieh- und Befestigungsvorrichtung dafür ausgebildet ist, den Draht zu ziehen und den Draht zu befestigen.

## Revendications

1. Procédé d'installation de pales d'éolienne sur un moyeu pouvant tourner autour d'un axe de rotation le long d'une direction horizontale (6), le procédé comprenant :
- lever une première pale (2a)
- faire tourner la première pale autour d'un axe transversal (4a) de la première pale ;
- monter la première pale sur le moyeu (81) ;
- lever une deuxième pale (2b) ;
- faire tourner la deuxième pale autour d'un axe transversal (2b) de la deuxième pale ;
- monter la deuxième pale sur le moyeu ;
- faire tourner le moyeu d'environ 180° autour d'un axe vertical (5) ;
- lever une troisième pale (2c) ; et
- monter la troisième pale sur le moyeu.

2. Procédé selon la revendication 1, comprenant, en outre :
- faire tourner la première pale autour d'un axe longitudinal (3a) de la première pale ;
- faire tourner la deuxième pale autour d'un axe longitudinal (3b) de la deuxième pale ; et/ou
- faire tourner la troisième pale autour d'un axe longitudinal (3c) de la troisième pale.

3. Procédé selon la revendication 1 ou 2, dans lequel l'axe transversal de la première pale et l'axe transversal de la deuxième pale sont parallèles à la direction horizontale (6).

4. Procédé selon la revendication 3, dans lequel une direction de rotation dans laquelle la première pale tourne autour de l'axe transversal de la première pale est opposée à une direction de rotation dans laquelle la deuxième pale tourne autour de l'axe transversal de la deuxième pale.

5. Procédé selon l'une quelconque des revendications précédentes, dans lequel une valeur absolue d'un angle de rotation de la rotation de la première pale autour de l'axe transversal de la première pale est égale à une valeur absolue d'un angle de rotation de la rotation de la deuxième pale autour de l'axe transversal de la deuxième pale, notamment 60°.

6. Pince pour pincer une pale d'éolienne, la pince comprenant :
- une première surface de contact (7) adaptée pour entrer en contact avec une partie d'une surface de la pale ;
- une seconde surface de contact (9) adaptée pour entrer en contact avec une autre partie de la surface de la pale, la seconde surface de contact pouvant être déplacée par rapport à la première surface de contact ;
- une barre (45) reliée à la première surface de contact selon une orientation réglable par rapport à celle-ci ;
- un système de réglage (55, 47) adapté pour régler l'orientation de la barre par rapport à la première surface de contact dans une première direction et adapté pour régler l'orientation de la barre par rapport à la première surface de contact dans une seconde direction différente de la première direction, la pince comprenant, en outre :
- un premier élément de support (19) relié à la première surface de contact ;
- un second élément de support (21) relié à la seconde surface de contact ;
- une articulation (31) reliant le premier élément de support et le second élément de support de manière rotative l'un par rapport à l'autre ;
**caractérisée en ce qu'**elle comprend
- un élément pivotant (41) relié de manière rotative au premier élément de support et relié de manière rotative à la barre.

7. Pince selon la revendication 6, comprenant, en outre :
- un vérin (33) adapté pour déplacer le premier élément de support par rapport au second élément de support.

8. Pince selon la revendication 7, dans laquelle le vérin comprend un cylindre hydraulique (33).

9. Pince selon l'une des revendications 6 à 8, dans laquelle le premier élément de support et/ou le second élément de support comprend/comprennent une partie pliée (23).

10. Pince selon l'une des revendications 6 à 9, dans laquelle le système de réglage comprend un premier cylindre hydraulique (55) dont une extrémité est reliée à l'élément pivotant et une autre extrémité est reliée à la barre pour régler l'orientation de la barre par rapport à la première surface de contact dans la première direction.

11. Pince selon l'une des revendications 6 à 10, dans laquelle le système de réglage comprend un second cylindre hydraulique (47) dont une extrémité est reliée à l'élément pivotant et une autre extrémité est reliée au premier élément de support pour régler l'orientation de la barre par rapport à la première surface de contact dans la seconde direction.

12. Pince selon l'une des revendications 6 à 11, comprenant, en outre, un dispositif de traction et de fixation (61) et un câble (67, 69), dans lequel le dispositif de traction et de fixation est configuré pour tirer le câble et fixer le câble.
